# EUROPEAN PATENT APPLICATION

(11) **EP 4 575 826 A1**
(43) Date of publication of application: **25.06.2025**
(21) Application number: 23855096.6
(22) Date of filing: 09.08.2023
(51) Int. Cl.: G06F 16/27, G06F 16/25, G06F 16/28, H04L 9/00

(54) **DYNAMIC SHARDING SYSTEM AND METHOD IN BLOCKCHAIN NETWORK**

(30) Priority: 17.08.2022 KR 20220102456
(71) Applicant: Bloom Technology, Inc., Seongnam-si, Gyeonggi-do 13487 (KR)
(72) Inventor: JOO, Young Hyun, Yongin-si Gyeonggi-do 16862 (KR)
(74) Representative: Murgitroyd & Company
(86) International application number: PCT/KR2023/011743
(87) International publication number: WO 2024/039129

(57) **Abstract**

The present disclosure relates to a dynamic sharding system and method, which involve adding a new-shard by splitting one shard into two in a blockchain network. A dynamic sharding system which runs on nodes constituting a blockchain network, according to one embodiment of the present disclosure, comprises a shard addition determination module for determining whether a shard needs to be added; a new-shard address derivation module for deriving a new-shard address based on the number of shards currently included in the blockchain network; a split-shard derivation module for deriving a split-shard split into a new-shard based on the new-shard address; and a shard allocation module for assigning a portion of the nodes which belong to the split-shard to the old-shard and the rest to the new-shard.

## Description

### [TECHNICAL FIELD]

The present disclosure relates to a dynamic sharding system and method in a blockchain network and more specifically, to a dynamic sharding system and method, which involve adding a new-shard by splitting one shard into two in a blockchain network.

### [BACKGROUND ART]

Blockchain is a decentralized distributed transaction management technology that has emerged to depart from the centralized approach in which traditional centralized institutions store transaction records at a single point. In a Peer-to-Peer (P2P) network, blockchain operates as a distributed ledger system in which all participants possess a predetermined shared ledger through a consensus algorithm, thereby preventing the falsification or tampering of records. In other words, the distributed ledger system is a system in which each node maintains a synchronized database called a ledger in a distributed environment without involving control by a central administrator.

In blockchain, for all nodes to maintain a synchronized ledger, all transactions and blocks occurring in the network have to be stored by all nodes. To this end, a conventional approach disseminated all messages to every node in the blockchain network using a flooding method. However, this approach leads to a scalability issue in which all nodes are required to receive and store every message.

To address the scalability issue, a sharding method has recently been proposed in the blockchain field, in which a plurality of nodes are distributed across a plurality of shard groups, and a plurality of transactions are split and processed in parallel within each shard. Sharding is a method that divides transactions and blocks occurring in the blockchain network into smaller groups called shards, and allows nodes in each shard to process only the transactions and blocks belonging to their own shard without needing to handle those of other shards, thereby reducing the overall transaction throughput of the entire network and the size of the distributed ledger.

However, with the introduction of the sharding technique, the number of nodes available for verifying transactions decreases in proportion to the number of shards, which increases the risk of data manipulation through consensus attacks by malicious nodes. A consensus attack is one of the most dangerous types of attacks on a blockchain. In a blockchain, a verification committee consisting of a plurality of nodes generally verifies blocks through majority consensus within the committee, and blocks that fail to reach consensus are excluded from selection and separated from the chain. In order to reach consensus on a specific block, a certain number of nodes exceeding a threshold among all the nodes in the network must agree.

In conventional blockchains, tens of thousands to hundreds of thousands of nodes are included in the verification committee, making it practically impossible for the number of malicious nodes to exceed a certain threshold. However, when the sharding technique is introduced, differences in transaction frequency, number of nodes, and the ratio of validators across shards may lead to imbalance over time, which can result in reduced stability in some shards. That is, in some shards, the number of malicious nodes may exceed a threshold, and if this happens, there is a risk that a fraudulent block could be added to the chain. When the sharding technique is applied, the number of nodes that an attacker needs to compromise is reduced, making it easier to control a number of nodes exceeding the threshold, thereby increasing the risk of fraudulent blocks being added to the chain.

Additionally, as the number of accounts and nodes in a shard increases, the amount of traffic between nodes also increases, which in turn slows down transaction processing. Therefore, when the total traffic volume in the blockchain network increases, the number of shards should be increased. The present disclosure proposes a dynamic sharding technique that increases the number of shards based on the traffic volume in the blockchain network.

### [DETAILED DESCRIPTION OF INVENTION]

### [TECHNICAL PROBLEMS]

An object of the present disclosure is to provide a dynamic sharding system and method that adds a new-shard by splitting one shard into two in a blockchain network.

### [TECHNICAL SOLUTION]

The present disclosure may be implemented in various forms, including a device (system), a method, a computer program stored in a computer-readable medium, or a computer-readable medium storing the computer program.

A dynamic sharding system according to one embodiment of the present disclosure which runs on nodes constituting a blockchain network comprises a shard addition determination module for determining whether a shard needs to be added, a new-shard address derivation module for deriving a new-shard address based on the number of shards currently included in the blockchain network, a split-shard derivation module for deriving a split-shard split into a new-shard based on the new-shard address, and a shard allocation module for allocating a portion of the nodes which belong to the split-shard to the old-shard and the rest to the new-shard.

More preferably, the node is a node belonging to a split-shard having the split-shard as its working shard, and the dynamic sharding system further includes a shard splitting module that manages an account-wise transaction chain and an account directory based on the shard allocated by the shard allocation module.

More preferably, the node is a node belonging to a non-split-shard having the non-split-shard as its working shard, and the dynamic sharding system further includes a shard moving module that allows the node belonging to the non-split-shard to change its working shard from the non-split-shard to the split-shard.

More preferably, the shard addition determination module determines whether shard addition is needed based on at least one of traffic volume, the number of nodes, and the number of accounts.

More preferably, the new-shard address derivation module derives the new-shard address by adding one to the highest value among the shard addresses currently included in the blockchain network.

More preferably, the split-shard derivation module derives the split-shard from among neighboring shards having a bit distance of 1 from the new-shard address.

More preferably, the split-shard derivation module derives the split-shard address by replacing the highest bit set to 1 in the binary value of the new-shard address with 0.

More preferably, the shard allocation module allocates the nodes belonging to the split-shard to the old-shard and the new-shard based on at least one of the stake amount and the number of nodes allocated to the old-shard and the new-shard after the split.

More preferably, the node is a node allocated to an old working shard, and the shard splitting module deactivates account-wise transaction chains for the accounts managed by nodes allocated to a new working shard, and deletes an account information assigned to a new home shard from the account directory.

More preferably, the node is a node allocated to the new working shard, and the shard splitting module deactivates account-wise transaction chains for the accounts managed by nodes allocated to an old working shard, and deletes an account information assigned to an old home shard from the account directory.

A dynamic sharding method implemented by at least one processor in a node constituting a blockchain network according to one embodiment of the present disclosure comprises determining whether a shard needs to be added, deriving a new-shard address based on the number of shards currently included in the blockchain network, deriving a split-shard split into a new-shard based on the new-shard address, and allocating a portion of the nodes which belong to the split-shard to the old-shard and the rest to the new-shard.

More preferably, the node is a node belonging to a split-shard having the split-shard as its working shard, and the dynamic sharding method further includes managing an account-wise transaction chain and an account directory based on the allocated shard.

More preferably, the node is a node belonging to a non-split-shard having the non-split-shard as its working shard, and the dynamic sharding method further includes allowing the node belonging to the non-split-shard to change its working shard from the non-split-shard to the split-shard.

More preferably, the determining whether shard addition is needed determines whether shard addition is needed based on at least one of traffic volume, the number of nodes, and the number of accounts.

More preferably, the deriving of the new-shard address based on the number of shards currently included in a blockchain network includes deriving the new-shard address by adding one to the highest value among the shard addresses currently included in the blockchain network.

More preferably, the deriving of the split-shard split into the new-shard based on the new-shard address includes deriving a split-shard from among neighboring shards having a bit distance of 1 from the new-shard address.

More preferably, the deriving of the split-shard split into the new-shard based on the new-shard address includes deriving the split-shard address by replacing the highest bit set to 1 in the binary value of the new-shard address with 0.

More preferably, the allocating of the portion of the nodes which belong to the split-shard to the old-shard and the rest to the new-shard includes allocating the nodes belonging to the split-shard to the old-shard and the new-shard based on at least one of the stake amount and the number of nodes allocated to the old-shard and the new-shard after the split.

More preferably, the node is an old working shard allocated node, and the managing of the account-wise transaction chains and the account directory based on the allocated shard includes allowing the old working shard allocated node to deactivates the account-wise transaction chains for accounts managed by the new shard allocated nodes and deletes home shard account information managed by the nodes allocated to the new-shard from its account directory.

More preferably, the node is a new working shard allocated node, and the managing of the account-wise transaction chains and the account directory based on the allocated shard includes allowing the new working shard allocated node to deactivates the account-wise transaction chains for the accounts managed by the old shard allocated nodes and deletes home shard account information managed by the nodes allocated to the new-shard from its account directory.

### [EFFECT OF INVENTION]

The present disclosure provides the following effects.

The present disclosure may divide a blockchain network into shard units and process transactions and blocks accordingly, thereby increasing the scalability of the blockchain network by reducing the transaction throughput and the size of the distributed ledger.

The present disclosure may distribute nodes by adding shards based on the traffic volume of the blockchain network and allow multiple transactions to be processed in parallel in each distributed shard, thereby reducing the transaction throughput and the size of the distributed ledger of the entire network.

When a shard is added, the present disclosure may generate a new-shard by splitting an existing shard without generating an empty shard, thereby ensuring continuity of information.

When a shard is added, the present disclosure may generate a new-shard by splitting an existing shard without generating an empty shard and allows nodes to be relatively evenly allocated to the new-shard, thereby ensuring the stability of the new-shard.

The technical effects of the present disclosure are not limited to the technical effects described above, and other technical effects not mentioned herein may be understood to those skilled in the art to which the present disclosure belongs from the appended claims.

### [BRIEF DESCRIPTION OF THE DRAWING]

Embodiments of the present disclosure will be described with reference to the accompanying drawings described below, wherein like reference numerals refer to like elements but are not limited thereto.
FIG. 1 illustrates a conceptual structure of a blockchain network split into three shards according to the present disclosure.
FIG. 2 is a block diagram illustrating an exemplary structure of a node including a dynamic sharding system according to the present disclosure.
FIG. 3 illustrates information stored in the data storage of a blockchain network according to the present disclosure.
FIG. 4 illustrates a dynamic sharding system according to one embodiment of the present disclosure.
FIG. 5 is a flowchart illustrating a dynamic sharding method of a node belonging to a split-shard according to one embodiment of the present disclosure.
FIG. 6 is a flowchart illustrating a dynamic sharding method of a node belonging to a non-split-shard according to one embodiment of the present disclosure.
Embodiments of the present disclosure will be described with reference to appended drawings described below, wherein like reference numerals refer to like elements but are not limited thereto.

### [DESCRIPTION OF REFERENCE NUMERALS]

| | | | |
|---|---|---|---|
| 400: | Dynamic sharding system | 402: | Shard addition determination module |
| 404: | New-shard address derivation module | 406: | Split-shard derivation module |
| 408: | Shard moving module | 410: | Shard allocation module |
| 412: | Shard splitting module | | |

### [BEST MODE FOR CARRYING OUT THE INVENTION]

In what follows, specifics for embodiment of the present disclosure will be described in detail with reference to appended drawings. However, in what follows, if a detailed description of well-known functions or configurations incorporated herein unnecessarily obscure the gist of the present disclosure, the detailed description thereof will be omitted.

In the accompanying drawings, identical or corresponding constituting elements are assigned the same reference numbers. Also, overlapping descriptions of the same or corresponding constituting elements may be omitted in the description of the embodiments below. However, even if descriptions regarding a constituting element are omitted, it should not be interpreted that the constituting element is not included in the corresponding embodiment.

The advantages and features of the present disclosure, and a method for achieving them will be clearly understood with reference to the embodiments described together with appended drawings. However, the present disclosure is not limited to the embodiments disclosed below but may be implemented in various other forms; rather, the present embodiments are provided to inform those skilled in the art completely of the technical scope of the present disclosure.

Unless otherwise defined, all terms (including technical and scientific terms) used herein may be used in a sense commonly understood by those skilled in the art to which the present disclosure belongs. Also, terms defined in commonly used dictionaries are not ideally or excessively interpreted unless otherwise explicitly defined.

For example, the term "technology" may refer to operations performed by systems, methods, computer-readable commands, modules, algorithms, hardware logics and/or any combination thereof as permitted by the context described above and throughout the present document.

The terms used in the present disclosure will be briefly described, which will be followed by detailed descriptions of the disclosed embodiments. The terms used in the present disclosure have been selected from commonly used and widely accepted terms that best describe the functions of the present disclosure; however, it should be noted that the selection of terms may vary depending on the intention of those persons skilled in the corresponding field, precedents, or emergence of new technologies. Also, in a particular case, some terms may be selected arbitrarily by the applicant, and in this case, detailed definitions of the terms will be provided in the corresponding description of the present disclosure. Therefore, the terms used in the present disclosure should be defined not simply by their apparent name but based on their meaning and context throughout the present disclosure.

In the present disclosure, a singular expression should be understood to include a plural expression unless the context explicitly indicates a singular expression. Also, a plural expression should be understood to include a singular expression unless the context explicitly indicates a plural expression. Throughout the disclosure, unless otherwise explicitly stated, if a particular element is said to include some particular element, it means that the former may further include other particular elements rather than exclude them.

The term "comprises" and/or "comprising" used in the present disclosure indicates the existence of features, steps, operations, components, and/or constituting elements; however, the term does not exclude addition of one or more other functions, steps, operations, components, constituting elements, and/or a combination thereof.

In the present disclosure, when a particular constituting element is referred to as being "coupled to," "combined with," "connected to," "related to," or as "responding to" any other constituting element, the particular constituting element may be directly coupled to, combined with, connected to, and/or related to, or may directly respond to the other constituting element; however, the present disclosure is not limited to the relationship. For example, there may be one or more intermediate constituting elements between a particular constituting element and another constituting element. Also, in the present disclosure, "and/or" may include one or more of the listed items or a combination of at least a portion of one or more of the listed items.

In the present disclosure, terms such as "first" and "second" are used merely to distinguish specific constituting elements from other constituting elements, and such terms do not limit the constituting elements described above. For example, the "first" constituting element may refer to a constituting element that is the same as or similar in form to the "second" constituting element.

In the present disclosure, the term "blockchain network" refers to a group of multiple computers (nodes) that participate in a blockchain system and communicate with each other in a peer-to-peer manner through the Internet or the like, and in the present disclosure, a "node" may be a computer participating in the blockchain network. Here, the term "computer" is used in a broad sense to include any device having a CPU, a memory, a communication function, and an input/output function and may specifically include a server computer, a personal computer (PC), a mobile terminal, and a small electronic device.

Anode may share and disseminate information through the blockchain network. The node manages one or more user accounts. The accounts managed by the node may include an account of the node owner (hereinafter referred to as a host account) and an account whose management is delegated by another user (hereinafter referred to as a guest account). The node may store all information related to the host and guest accounts it manages and may transmit the information to other nodes on the blockchain network; the node may also receive up-to-date information related to the host and guest accounts managed by other nodes.

In the present disclosure, "account" refers to a user account participating in a blockchain and may be a data structure representing a user. An account may add information to a blockchain system by issuing a transaction and may be a linked list of transactions issued by the user. A transaction may be a unit of data that the user adds to the system. An account may own a node and directly manage its own transaction information, and such an account may be referred to as a host account. Alternatively, an account may entrust the management of its transaction information to another user's node, and such an account may be referred to as a guest account, while the node entrusted with account management may be referred to as an entrusted node. Authentication between a node and an account may be performed using an encryption key, and transactions may be signed using the same encryption key. A guest account may become a host account by operating its own node and may also change its entrusted node; a host account may designate an entrusted node and thereby become a guest account.

In the present disclosure, the term "transaction" refers to a unit of information added to the blockchain and may be issued independently by a single account. Although the content of a transaction may nominally be arbitrary information provided by the user, it may, in practice, represent meaningful messages within the system. For example, a transaction may include messages such as "Account A sent 100 coins to Account B" or "Account B received 100 coins from Account A." In the present disclosure, the transaction sequence number is a positive integer starting from 0, incrementing by 1 for each transaction; an Account-Wise Transaction Chain (AWTC) is used, which manages a ledger for each account. The technical details of the AWTC may be understood with reference to Korean Published Patent No. 2021-0015196.

In the present disclosure, the term "block" may refer to a signed list of transactions added to a shard or a blockchain network during a specific period. A block may be generated by signing a list of generated transactions through a consensus algorithm. Only one block may be generated at a time, and a blockchain may be formed by sequentially adding new blocks to the existing block list.

In the present disclosure, the term "shard" may refer to a subset of nodes participating in the blockchain network. The entire blockchain network may be split into at least two or more shards. When splitting is not applied, it may be regarded that all nodes participate in a single shard, and each shard has a unique address. Typically, in a blockchain network employing the sharding technique, nodes within the same shard communicate with each other through peer-to-peer communication and share account-wise transaction chains (AWTCs) of all accounts belonging to the same shard.

In the present disclosure, every account may have one working shard and one home shard. The working shard and home shard of a given account may be the same or may differ. In the present disclosure, the "home shard" of an account may be calculated based on a function that takes the account's address and the total number of shards as parameters. In the present disclosure, the "working shard" of an account refers to the shard to which the corresponding account currently belongs and in which the corresponding account operates; the working shard may be a conventional shard. In other words, in a blockchain network that applies a conventional sharding technique, nodes belonging to the same shard communicate with one another through peer-to-peer communication and share the ledgers of all accounts belonging to the same shard. In a blockchain network to which the present disclosure is applied, nodes having the same working shard may communicate with each other through peer-to-peer communication and may share the account-wise transaction chains (AWTCs) of all accounts belonging to the same working shard.

If one shard is split into two by the dynamic sharding method of the present disclosure, the nodes that have the corresponding shard as a home shard are also split, and the nodes that have the corresponding shard as a working shard are likewise split. In other words, the home shard and working shard of the split nodes and accounts may be changed.

In the present disclosure, an "intra-shard transaction" may refer to a transaction between nodes that have the same working shard. An "inter-shard transaction" may refer to a transaction between nodes that have different working shards.

Each shard may include a set of accounts for which the corresponding shard serves as a home shard and a set of accounts for which the corresponding shard serves as a working shard. The accounts forming the blockchain network each have to be associated with one home shard and one working shard. The home shard and the working shard may be the same or may differ.

A node may change its associated working shard from one working shard to another; when the node changes its working shard, the host accounts and guest accounts managed by the node may also change their working shard at the same time.

In the present disclosure, all nodes belonging to the blockchain network may include a dynamic sharding system and may derive a shard splitting condition, the address of a newly generated shard (in what follows, referred to as the "new-shard"), the address of a shard to be split (in what follows, referred to as the "split-shard"), and the nodes that remain in the existing shard and the nodes that move to the new-shard. In the present disclosure, the nodes belonging to the split-shard may be split into two groups. One of the two shards created by splitting may retain the same address as the split-shard (referred to as the "old-shard"), and the other may be assigned a new address as the new-shard. The nodes belonging to the split-shard may be split into nodes that remain in the old-shard and nodes that move to the new-shard.

In the present disclosure, all shards that constitute the blockchain network may have respective addresses. The address of a shard may be assigned in the order in which the shard is created within the network. The highest value among the shard addresses in the blockchain network may be a value based on the total number of shards. The address of a new-shard may be "the highest value of the current network's shard addresses + 1."

In the present disclosure, shard splitting does not refer to a physical split but may refer to the operation in which some of the nodes belonging to the split-shard are allocated to the old-shard and the remaining nodes are allocated to the new-shard.

Before the split-shard is split, all nodes belonging to the split-shard may perform peer-to-peer communication and share the account-wise transaction chains (AWTCs) of all accounts belonging to the split-shard. However, after the split-shard is split into the old-shard and the new-shard, only the nodes allocated to the old-shard share the account-wise transaction chains among themselves (and not with the nodes allocated to the new-shard), and only the nodes allocated to the new-shard share the account-wise transaction chains among themselves (and not with the nodes allocated to the old-shard).

In the present disclosure, "peer-to-peer communication" in the blockchain network and in a shard may refer to a process in which, when an arbitrary node receives particular information, the node replicates and transmits the received information to other nodes, and the receiving nodes also repeat the process of replicating and forwarding the information to other nodes, and after a sufficient amount of time, all nodes in the blockchain network and the shard may share the corresponding information.

In the present disclosure, a "round" may refer to a unit time for consensus. In the present disclosure, a transaction shared in the previous round may become the target of consensus in the current round.

In the present disclosure, a "neighboring shard" of a given shard may refer to a shard whose address has a bit distance of 1 from the address of the corresponding shard. A bit distance of 1 means that, when two binary values are compared bit by bit, only one bit differs. For example, with respect to the binary value "0101", a binary value differing at only the first bit is "0100", at the second bit is "0111", at the third bit is "0001", and at the fourth bit is " 1101". Accordingly, the binary values "0100", "0111", "0001", and "1101" each differ from "0101" by exactly one bit. In this manner, the present disclosure defines a bit distance of 1 as a binary value differing from an arbitrary binary value at only one bit position and defines a neighboring shard as a shard whose address has a bit distance of 1 from that of an arbitrary shard. In the present disclosure, the old-shard and the new-shard that are split from the split-shard may be neighboring shards with a bit distance of 1 between their addresses.

The operating system described below constitutes one embodiment and is not intended to limit the scope of the claims to any one specific operating environment. The operating system may also be used in other environments without departing from the technical spirit and scope defined by the appended claims.

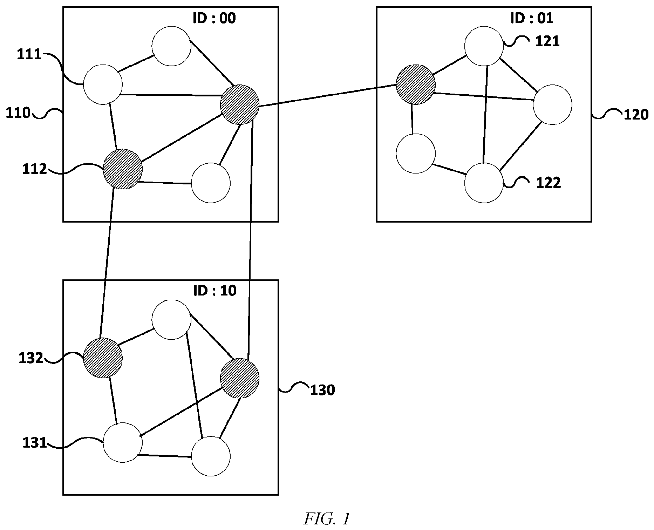

FIG. 1 illustrates a conceptual structure of a blockchain network split into three shards according to the present disclosure.

A plurality of nodes forming the blockchain network may be split into three shards 110, 120, 130, but the present disclosure is not limited to the specific example. The number of shards may increase as the number of nodes and accounts constituting the blockchain network increases, and at this time, one shard may be split into two. Each shard 110, 120, 130 may be a working shard of the nodes currently belonging to the shard. All nodes belonging to the current working shard may share the same information.

Each node may include an intra-shard communication node list that stores information on peer-to-peer communication targets (intra-shard communication nodes) from the nodes within the working shard and an inter-shard communication node list that stores information on peer-to-peer communication targets (inter-shard communication nodes) among the nodes outside the working shard.

The intra-shard communication nodes, which are communication targets within the working shard of each node, may be determined according to the Kademlia rule. The inter-shard communication nodes, which are communication targets outside the working shard of each node, may be randomly selected from among the nodes belonging to neighboring shards.

Based on the intra-shard communication node list and the inter-shard communication node list determined in this manner, information sharing through peer-to-peer communication within and outside the working shard becomes possible. The information shared by a given node with intra-shard communication nodes may differ from the information shared with inter-shard communication nodes. In other words, the information shared with inter-shard communication nodes may be more limited than the information shared with intra-shard communication nodes. The intra-shard and inter-shard communication nodes included in the intra-shard and inter-shard communication node lists allocated to each node may be randomly reconfigured.

In FIG. 1, the nodes communicating with other nodes within the working shard 111, 121, 131 are represented as unhatched circles, while the nodes communicating with nodes outside the working shard 112, 122, 132 are represented as hatched circles. The nodes 112, 122, 132 communicating with nodes outside the working shard may communicate with nodes belonging to neighboring shards based on the inter-shard communication node list. Here, a neighboring shard may refer to a shard whose address has a bit distance of 1 from the address of the current shard. A bit distance of 1 may mean that the address of the shard differs by only one bit position. In other words, for an address of "00," addresses with a bit distance of 1 may be "01" and "10."

In the example of FIG. 1, if the address of the first shard 110 is "00," the address of the second shard 120 is "01," and the address of the third shard 130 is "10," then the addresses of the first shard 110 and the second shard 120 are "00" and "01" respectively, having a bit distance of 1. Similarly, the addresses of the first shard 110 and the third shard 130 are "00" and "10" respectively, having a bit distance of 1. However, the addresses of the second shard 120 and the third shard 130 are "01" and "10" respectively, which differ in two bit positions, and thus do not have a bit distance of 1.

Accordingly, the first shard and the second shard are neighboring shards, and the first shard and the third shard are neighboring shards, capable of directly communicating with each other. However, since the second shard and the third shard are not neighboring shards, they may not directly communicate with each other and have to communicate through the first shard, which is a neighboring shard to both.

Each node in FIG. 1 may include a shard rebalancing algorithm, which may be executed based on predetermined conditions. The shard rebalancing algorithm may utilize the Bounded Cuckoo algorithm but is not limited thereto. The Bounded Cuckoo algorithm is described in detail in the RapidChain introduction document (RapidChain: Scaling Blockchain via Full Sharding, see https://eprint.iacr.org/2018/460.pdf). The present disclosure may calculate a health index of each shard using the Bounded Cuckoo algorithm, classify the shards into strong shards and weak shards, and periodically extract a portion of nodes randomly from the strong shards to move them to the weak shards.

When the shard rebalancing algorithm is executed, nodes that are to change their working shard may be randomly selected, and their working shard may be reallocated. When a split-shard is determined according to the present disclosure, nodes belonging to shards other than the split-shard may randomly change their working shard to the split-shard. If the working shard of a node is changed, the node may perform a working shard change procedure for all host accounts and guest accounts it manages.

Also, a node may individually perform a working shard change procedure for the host and guest accounts it manages. For example, if a guest account entrusted to the node changes its entrusted node and the new entrusted node belongs to a different working shard, the node may perform the working shard change procedure for the corresponding guest account. Alternatively, if the node newly begins entrusted management of a third account previously managed by another node belonging to a different working shard, the node may perform the working shard change procedure for the corresponding third account.

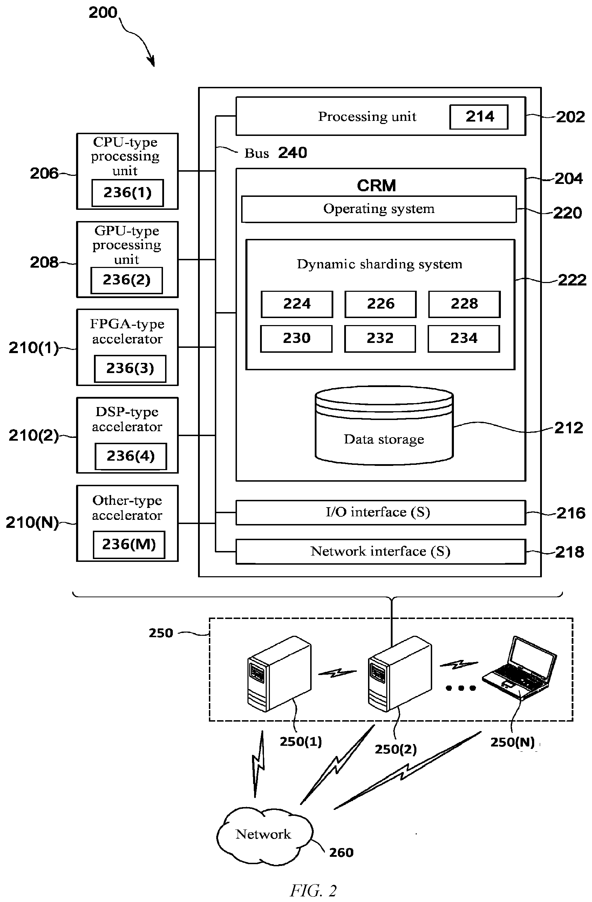

FIG. 2 is a block diagram illustrating an exemplary structure of a node 200 including a dynamic sharding system according to the present disclosure. Each node may be implemented as a computing device.

In some examples, various devices and/or constituting elements of the node 200 may include distributed computing resources 250 capable of communicating with each other and with external devices via one or more networks 260.

In various embodiments, the distributed computing resources 250 may include devices 250(1), ..., 250(N).

The embodiment of the present disclosure supports scenarios employing one or more computing devices, in which distributed computing resources 250 operate in a cluster or other grouped configurations to share resources, distribute loads, improve performance, or serve other purposes.

The distributed computing resources 250 may correspond to various categories, such as conventional server-type devices, desktop computer-type devices, mobile devices, special-purpose devices, embedded devices, and/or wearable devices. Accordingly, although described as desktop and laptop computers, the distributed computing resources 250 may include various types of devices and are not limited to any specific type. The distributed computing resources 250 may include desktop computers, server computers, web server computers, personal computers, mobile computers, laptop computers, tablet computers, wearable computers, implantable computers, communication devices, automotive computers, network-enabled televisions, thin clients, terminals, PDAs, game consoles, gaming devices, workstations, media players, personal video recorders, set-top boxes, cameras, and integrated components to be included in computing devices.

The node 200 may be a single computing device that constitutes one of the distributed computing resources 250. The node 200 may include arbitrary type of computing device having one or more processing units 202 operably connected to a computer-readable medium (CRM) 204 via a bus 240 and in some cases, may include one or more of them. The bus 240 may include a system bus, data bus, address bus, PCI bus, mini PCI bus, and various local, peripheral, and/or independent buses.

In the node 200, the processing unit 202 may include a processing unit 202 representing, for example, a CPU-type processing unit, a GPU-type processing unit, a field-programmable gate array (FPGA), a digital signal processor (DSP), or another hardware logic component that may be driven by a CPU.

For example, the hardware logic components may include application-specific integrated circuits (ASICs), application-specific standard products (ASPs), system-on-a-chip (SOC) systems, and complex programmable logic devices (CPLDs). Specifically, the CRM 204 may store instructions executable by an external processing unit 208 such as an external CPU-type processing unit 206 and an external GPU-type processing unit 208; and/or an external accelerator 210 such as an FPGA-type accelerator 210(1), a DSP-type accelerator 210(2), or another accelerator 210(N).

The CRM 204 described in the present disclosure may include computer storage media and/or communication media.

The computer storage media may include a storage unit such as volatile memory, nonvolatile memory, and/or other permanent or auxiliary computer storage media; and removable and non-removable computer storage media, which are implemented using an arbitrary method or technology for storing information such as computer-readable commands, data structure, program module, or other data.

The computer storage media may include RAM, static RAM (SRAM), dynamic RAM (DRAM), phase-change memory (PRAM), read-only memory (ROM), erasable programmable read-only memory (EPROM), electrically erasable programmable read-only memory (EEPROM), flash memory, DVDs, optical storage media, magnetic cassettes, magnetic tapes, and solid-state drives (SSDs).

The executable instructions stored in the CRM 204 may include an operating system 220 and other modules, programs, or applications that are loadable and executable by the processing unit 202.

Additionally or alternatively, the parts described functionally in the present disclosure may be performed at least in part by one or more hardware logic components such as accelerators.

For example, exemplary types of hardware logic components that may be used include field-programmable gate arrays (FPGAs), application-specific integrated circuits (ASICs), application-specific standard products (ASSPs), system-on-a-chip system (SoC), and complex programmable logic devices (CPLD). For instance, the accelerator may be a hybrid device from XILINX or ALTERA that includes a CPU embedded in the FPGA fabric.

In the illustrated embodiment, the CRM 204 may also include data storage 212. In some embodiments, the data storage 212 may include a data repository such as a database, a data warehouse, or other type of structured or unstructured data storage.

In some embodiments, the data storage 212 may include a corpus and/or a relational database having one or more HyperText Markup Language (HTML) tables, Resource Description Framework (RDF) tables, Web Ontology Language (OWL) tables, and/or one or more tables enabling data access such as web tables including Extensible Markup Language (XML) tables, indexes, and storing procedures.

For example, the data storage 212 may store data and/or instructions for the operation of processes, applications, components, and/or modules stored in the CRM 204 and executed by the processing unit 202.

The node 200 may further include one or more input/output (I/O) interfaces 216, and the input/output (I/O) interface 216 may be an I/O interface that allows the node 200 to communicate with input/output devices that enable communication with user input devices (e.g., keyboard, mouse, pen, game controller, voice input device, touch input device, gesture input device, or camera) and peripheral output devices (e.g., display or printer).

Also, the node 200 may be a node of a blockchain network and may further include one or more input/output (I/O) network interfaces 218 that enable the node 200 to communicate with other nodes of the blockchain network through the network 260.

The input/output (I/O) network interface 218 may include one or more network interface controllers (NICs) or other types of transceiver devices for transmitting and receiving data over the network 260.

The network 260 may include public networks such as the Internet, private networks such as institutional and/or personal intranets, or some combination of private and public networks. The network 260 may include any type of wired and/or wireless network, including, but not limited to, local area networks (LANs), wide area networks (WANs), satellite networks, cable networks, Wi-Fi networks, and WiMax networks and may include mobile communication networks (e.g., 3G, 4G, or 5G network) or any combination thereof. The network 260 may utilize communication protocols including packet-based and/or datagram-based protocols, such as Internet Protocol (IP), Transmission Control Protocol (TCP), User Datagram Protocol (UDP), or other types of protocols.

Furthermore, the network 260 may include a plurality of devices that facilitate network communication or form the hardware infrastructure for the network, such as switches, routers, gateways, access points, firewalls, base stations, repeaters, and backbone devices.

In some embodiments, the network 260 may further include devices that enable connection to a wireless network, such as a wireless access point (WAP). Embodiments of the present disclosure may support connections via a WAP that transmits and receives data through various electromagnetic frequencies (e.g., radio frequencies), including WAPs supporting the Institute of Electrical and Electronics Engineers (IEEE) 802.11 standards (e.g., 802.11g or 802.11n).

In the illustrated embodiment, the CRM 204 may include an operating system 220 and a dynamic sharding system 222. The dynamic sharding system 222 may include one or more modules and/or APIs represented by blocks 224, 226, 228, 230, 232, and 234, which is merely an example, and a greater or fewer number of modules and/or APIs may be included. The functions described with respect to each of the blocks 224, 226, 228, 230, 232, and 234 may be combined and performed by a fewer number of modules and/or APIs or may be split and performed by a greater number of modules and/or APIs.

Alternatively, all or part of the operating system, the data stored in the data storage, and the transaction system of the account may be stored in separate memory 236, such as memory 214 on the processing unit 202, memory 236(1) on the CPU-type processing unit 206, memory 236(2) on the GPU-type processing unit 208, memory 236(3) on the FPGA-type accelerator 210(1), memory 236(4) on the DSP-type accelerator 210(2), and/or memory 236(M) on other-type of accelerator 210(N).

The dynamic sharding system 222 may include a shard addition determination module 224, a new-shard address derivation module 226, a split-shard derivation module 228, a shard moving module 230, a shard allocation module 232, and a shard splitting module 234.

All nodes constituting the blockchain network may include the dynamic sharding system.

In a node having a split-shard as its working shard (in what follows, referred to as a node belonging to a split-shard), the shard addition determination module 224, the new-shard address derivation module 226, the split-shard derivation module 228, the shard allocation module 232, and the shard splitting module 234 may operate. In a node having a shard other than the split-shard as its working shard (in what follows, referred to as a node belonging to a non-split-shard), the shard addition determination module 224, the new-shard address derivation module 226, the split-shard derivation module 228, and the shard moving module 230 may operate.

The shard addition determination module 224 may compare the traffic volume of the blockchain network or its working shard with a predefined threshold value and, if the traffic volume exceeds the threshold value, determine that a shard has to be added. The shard addition determination module 224 may determine whether to add a shard based on the number of nodes or the number of accounts belonging to the shard.

The new-shard address derivation module 226 may calculate the address of a new-shard based on the number of shards currently included in the network. The new-shard address may be "the highest shard address in the current network + 1." All nodes included in the network may operate the new-shard address derivation module 226 to generate the new-shard address information.

The split-shard derivation module 228 may calculate the address of the split-shard to be split into the new-shard, based on the new-shard address. The new-shard and the split-shard may be neighboring shards with a bit distance of 1. The split-shard derivation module 228 may derive the split-shard address by replacing the most significant set bit (MSSB) of the binary value of the new-shard address with 0.

The shard moving module 230 is a module operating in a node belonging to a non-split-shard, recognizes itself as a target to be moved, and changes its working shard to the split-shard.

The shard allocation module 232 allocates a portion of the nodes having the split-shard as their working shard to the old-shard and the remainder to the new-shard. The shard allocation module 232 may allocate nodes to each shard so that the stake and the number of nodes in the two shards after the split are approximately equal. Additionally, accounts having the split-shard as their home shard may also be allocated to the old-shard and the new-shard. All nodes constituting the network may derive the nodes and accounts allocated to the old-shard and the nodes and accounts allocated to the new-shard using the same derivation formula.

The shard splitting module 234 is a module operating in a node belonging to the split-shard and manages the account-wise transaction chain and account directory based on the allocated shard.

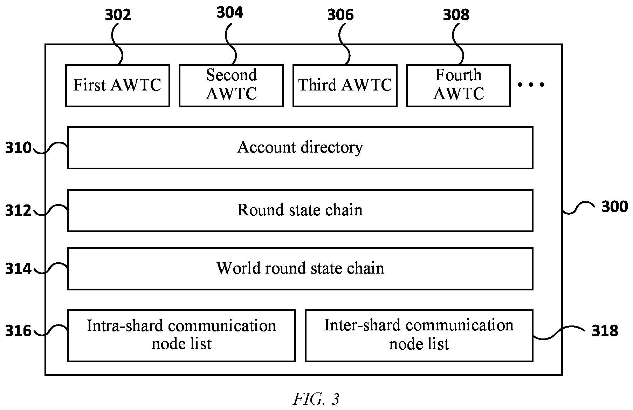

FIG. 3 illustrates information stored in the data storage 300 of a blockchain network according to the present disclosure.

The data storage 300 of the node may store the account-wise transaction chains (AWTCs) 302, 304, 306, and 308 of all accounts belonging to the working shard of the node; the account directory 310 storing the working shard history information of accounts that have the working shard of the node as their home shard; the round state chain 312 that combines the account-wise transactions of all accounts belonging to the working shard and stores, as a chain, the round state blocks agreed upon among all nodes in the working shard; the world round state chain 314 that combines and stores as a chain the world round state blocks agreed upon by all round state blocks belonging to the blockchain network; the intra-shard communication node list 316 storing communication target node information within the working shard of the node; and the inter-shard communication node list 318 storing communication target node information outside the working shard of the node.

The account directory 310 stores the working shard history information of accounts that have the node's working shard as their home shard. In the present example, for the sake of convenience, it is assumed that each node manages only one account, that is, a host account. Therefore, in the present example, a node may be regarded as the same concept as an account. For example, in the case of FIG. 1, if the home shard of the node 111 management account is the second shard 120, the account directories of nodes 121 and 122, which have the second shard 120 as their working shard, store the first shard 110 as the working shard information of the node 111 management account. Meanwhile, in the example of FIG. 1, if the home shard of the node 112 management account is the third shard 130, the account directories of nodes 131 and 132, which have the third shard 130 as their working shard, store the first shard 110 as the working shard information of the node 112 management account.

As described above, nodes and accounts may change their working shard. When the working shard is changed, the shard moving module of the present disclosure may be operated so that the nodes belonging to the home shard of the corresponding account are updated with the changed working shard information.

According to the present disclosure, it is preferable that the account directories of the nodes belonging to the home shard of a given account are updated with the latest working shard address of the corresponding account by the shard moving module.

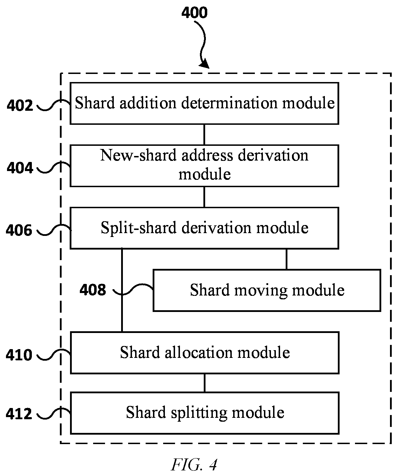

FIG. 4 illustrates a dynamic sharding system according to one embodiment of the present disclosure.

The dynamic sharding system 400 may be implemented by the computer system of a node, and the dynamic sharding system 400 of FIG. 4 may correspond to the dynamic sharding system 222 of FIG. 2.

The dynamic sharding system 400 executed on the node according to the present disclosure may include a shard addition determination module 402 that determines whether a shard needs to be added, a new-shard address derivation module 404 that derives the new-shard address based on the number of shards currently included in the network, a split-shard derivation module 406 that derives the address of the split-shard based on the new-shard address, and a shard allocation module 410 that allocates a portion of the nodes belonging to the split-shard to the old-shard and the remaining nodes to the new-shard.

The node may belong to a split-shard, and the dynamic sharding system 400 may further include a shard splitting module 412 that manages account-wise transaction chains and account directories based on the allocated shards.

The node may belong to a non-split-shard, and the dynamic sharding system 400 may further include a shard moving module 408 that moves the working shard to the split-shard.

The shard addition determination module 402 may compare the traffic volume of the blockchain network or the associated working shard with a predetermined threshold and determine that an additional shard is needed. The blockchain network according to the present disclosure may maintain the traffic volumes across shards at similar levels by moving the working shards of nodes through a shard rebalancing process. If the number of accounts or nodes is larger than the number of shards constituting the blockchain network, the traffic volume of intra-shard and inter-shard communications may increase, and peer-to-peer communication may not be completed within a predetermined round time. The shard addition determination module 402 may compare the traffic volume with the threshold and determine that an additional shard is needed. In another embodiment, the shard addition determination module 402 may determine whether to add a shard based on the number of nodes and accounts belonging to a single working shard. If additional shards are required, a shard addition transaction may be generated, and the shard addition transaction may be finalized through consensus among the nodes. The agreed-upon shard addition transaction may be shared with all nodes on the network through peer-to-peer communication.

The new-shard address derivation module 404 may derive the address of a new-shard based on the number of shards currently included in the network. The new-shard address may be "the highest shard address value in the current network + 1." In other words, the new-shard may have the largest address value among the shards included in the network. All nodes in the network may operate the new-shard address derivation module 404 to derive the new-shard address information.

The split-shard derivation module 406 may derive the split-shard to be split into the new-shard based on the new-shard address. The new-shard and the split-shard may be neighboring shards with a bit distance of 1. The split-shard derivation module 406 may derive the split-shard address by changing the most significant set bit (MSSB) of the binary value of the new-shard address from 1 to 0. For example, if the new-shard address is "1100," the MSSB is the fourth bit, and replacing the 1 at the MSSB with 0 results in "0100." In other words, the address of the partitioned shard is "0100." As another example, if the new-shard address is "10001," the MSSB is the fifth bit, and replacing the 1 at the MSSB with 0 results in the split-shard address "00001." All nodes included in the network may operate the split-shard derivation module 228 to derive the split-shard address information.

Table 1 illustrates examples of split-shard addresses corresponding to the respective new-shard addresses.

**[Table 1]**

| New-shard address | Split-shard address |
|---|---|
| 1000 | 0000 |
| 1001 | 0001 |
| 1010 | 0010 |
| 1011 | 0011 |
| 1100 | 0100 |
| 1101 | 0101 |
| 1110 | 0110 |
| 1111 | 0111 |

As shown in Table 1, when the most significant set bit (MSSB) of the new-shard address is changed from 1 to 0 to create the split-shard, a different split-shard is created each time the new-shard increases, which allows the shards constituting the network to participate in the splitting relatively evenly. If the shard is split immediately after the split-shard is determined, the resulting shards (the old-shard and the new-shard) will each have only about half the number of nodes compared to other non-split-shards. If the number of nodes constituting the shard is small, the risk of an attacker gaining control of the corresponding shard and manipulating the consensus result may increase. To avoid the risk, the present disclosure allows a portion of nodes belonging to a non-split-shard to change their working shard to the split-shard before the split-shard is split. The nodes that change their working shard from a non-split-shard to a split-shard may be randomly selected, and information about the nodes that change their working shard from a non-split-shard may be shared with nodes in other non-split-shards.

The shard moving module 408 is a module operating in some of the nodes belonging to a non-split-shard, recognizes itself as a target to be moved, and changes its working shard to the split-shard. The specific method by which a node changes its working shard may be understood with reference to Korean Patent Application No. 10-2022-0072023, titled "System and Method for Changing a Working-Shard of an Account in Blockchain Network," which has been filed by the applicant of the present disclosure.

The shard allocation module 232 allocates a portion of the nodes having the split-shard as their working shard to the old-shard and the remainder to the new-shard. The shard allocation module 232 may allocate nodes to each shard so that the stake and the number of nodes in the two shards after the split are approximately equal. Additionally, accounts having the split-shard as their home shard may also be allocated to the old-shard and the new-shard. All nodes constituting the network may derive the nodes and accounts allocated to the old-shard and the nodes and accounts allocated to the new-shard using the same derivation formula.

Here, a node for which the old-shard is allocated as its working shard is referred to as an old working shard allocation node, while a node for which the new-shard is allocated as its working shard is referred to as a new working shard allocation node; an account for which the old-shard is allocated as its home shard is referred to as an old home shard allocation account, while an account for which the new-shard is allocated as its home shard is referred to as a new home shard allocation account.

The shard splitting modules 412 of the old working shard allocation node and the new working shard allocation node operate differently. In other words, the shard splitting module 412 of the old working shard allocation node deactivates the account-wise transaction chains for all accounts managed by the new working shard allocation node and deletes the new home shard allocation account information from the account directory. The shard splitting module 412 of the new working shard allocation node deactivates the account-wise transaction chains for all accounts managed by the old working shard allocation node and deletes the old home shard allocation account information from the account directory.

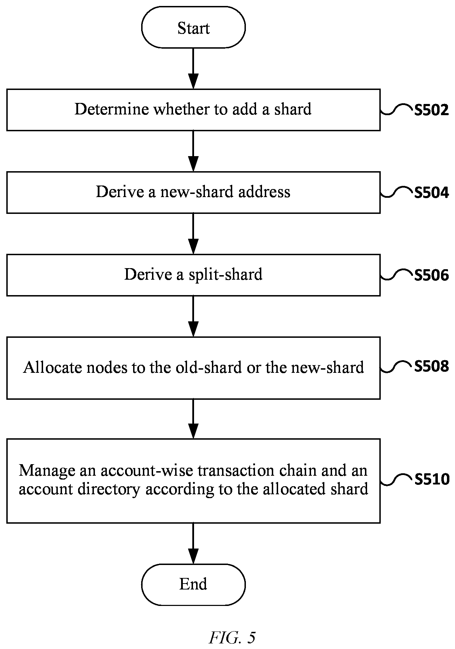

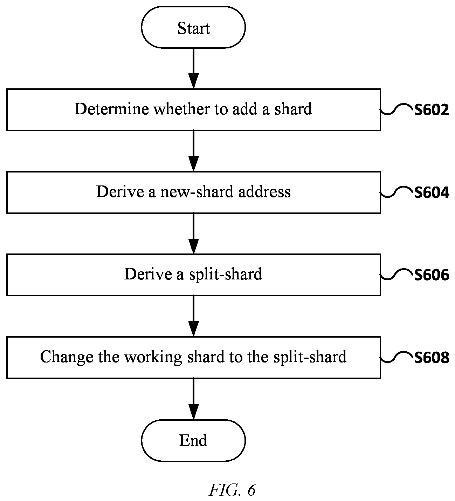

FIG. 5 is a flowchart illustrating a dynamic sharding method of a node belonging to a split-shard according to one embodiment of the present disclosure, and FIG. 6 is a flowchart illustrating a dynamic sharding method of a node belonging to a non-split-shard according to one embodiment of the present disclosure.

The operation of an exemplary process is illustrated using individual blocks and described with reference to these blocks. The process is shown as a logical flow of blocks, and each block may represent one or more operations implemented in hardware, software, or a combination thereof. In the context of software, an operation represents computer-executable instructions stored on one or more computer-readable media that, when executed by one or more processors, enable the processors to perform the referenced operations. In general, computer-executable instructions include routines, programs, objects, modules, components, data structures, or the like that perform particular functions or implement particular abstract data types. The sequence in which the operations are described should not be construed as limiting, and the number of operations described may be performed in any order, subdivided into a plurality of sub-operations, or executed in parallel.

With reference to FIG. 5, the dynamic sharding method for nodes belonging to the split-shard will be described.

The node belonging to the split-shard determines whether a shard needs to be added based on at least one of the following: the traffic volume of the blockchain network or its working shard, the number of nodes in the shard, or the number of accounts associated with the shard S502.

The node belonging to the split-shard derives the address of the new-shard based on the number of shards currently belonging to the network S504. The new-shard address may be "the highest shard address value in the current network plus 1."

The node belonging to the split-shard derives the address of the split-shard to be split into the new-shard based on the new-shard address S506. It is preferable that the new-shard and the split-shard are neighboring shards having a bit distance of 1.

The node belonging to the split-shard allocates a portion of the nodes with the split-shard as their working shard to the old-shard and the rest to the new-shard; the node also allocates the accounts having the split-shard as their home shard to either the old-shard or the new-shard S508.

The node belonging to the split-shard manages the account-wise transaction chain and the account directory according to the shard to which the node is allocated S510. If the node belonging to the split-shard is allocated to the old working shard, the node deactivates the account-wise transaction chains for all accounts managed by the node allocated to the new working shard and deletes the new home shard allocation account information from the account directory. Meanwhile, if the node belonging to the split-shard is allocated to the new working shard, the node deactivates the account-wise transaction chains for all accounts managed by the node allocated to the old working shard and deletes the old home shard allocation account information from the account directory.

With reference to FIG. 6, a dynamic sharding method performed by a node belonging to a non-split-shard is described.

The node belonging to the non-split-shard determines whether to add a shard based on at least one of the following: the traffic volume of the blockchain network or its associated working shard, the number of nodes belonging to the shard, or the number of accounts associated with the shard S602.

The node belonging to the non-split-shard derives the address of the new-shard based on the number of shards currently belonging to the network S604. The new-shard address may be "the highest shard address value in the current network plus 1."

The node belonging to the non-split-shard derives the address of the split-shard to be split into the new-shard based on the new-shard address S606. It is preferable that the new-shard and the split-shard are neighboring shards having a bit distance of 1.

The node belonging to the non-split-shard changes its working shard from the non-split-shard to the split-shard S608.

The methods and processes described above may be implemented and fully automated as one or more software code modules executed by one or more general-purpose computers or processors. The code modules may be stored in any type of computer-readable storage medium or other computer storage devices. All or part of the methods may be implemented by specialized computer hardware.

Any routine description, element, or block of the flowcharts described in the present disclosure and/or illustrated in the accompanying drawings should be understood as potentially representing a code, module, segment, or portion comprising one or more executable instructions for implementing specific logical functions or elements. Alternative embodiments are included within the scope of the examples described herein and may be executed in order starting from that in which its element or function has been deleted, illustrated, or discussed, according to the functionality that may be understood.

Numerous modifications and variations may be made to the embodiments described above, and the elements should be understood as being one of various acceptable examples. All the modifications and variations are intended to be included within the scope of the present disclosure and protected by the scope defined by the appended claims below. The embodiments of the present disclosure described above may be implemented in the form of program commands which may be executed through various types of computer means and recorded in a computer-readable recording medium. The computer-readable recording medium may include program commands, data files, and data structures separately or in combination thereof. The program commands recorded in the computer-readable recording medium may be those designed and configured specifically for the present disclosure or may be those commonly available for those skilled in the field of computer software. Examples of a computer-readable recoding medium may include magnetic media such as hard-disks, floppy disks, and magnetic tapes; optical media such as CD-ROMs and DVDs; magneto-optical media such as floptical disks; and hardware devices specially designed to store and execute program commands such as ROM, RAM, and flash memory. Examples of program commands include not only machine codes such as those generated by a compiler but also high-level language codes which may be executed by a computer through an interpreter and the like. The hardware device may be configured to be operated by one or more software modules to perform the operations of the present disclosure, and vice versa.

The present disclosure has been described with reference to specific constituting elements and a limited number of embodiments and drawings, which has been intended only to help overall understanding of the present disclosure. Therefore, the present disclosure is not limited to the specific embodiments, and various changes and modifications are possible from the disclosure by those skilled in the art to which the present disclosure belongs.

Therefore, the technical scope of the present disclosure should not be confined to that provided by the embodiments, and it should be noted that not only the appended claims but also all of those equivalent to the appended claims or modifications which may be regarded as being equal thereto belong to the technical scope of the present disclosure.

## Claims

1. A dynamic sharding system which runs on nodes constituting a blockchain network, the dynamic sharding system comprising:
a shard addition determination module for determining whether a shard needs to be added;
a new-shard address derivation module for deriving a new-shard address based on the number of shards currently included in the blockchain network;
a split-shard derivation module for deriving a split-shard splits into a new-shard based on the new-shard address; and
a shard allocation module for allocating a portion of the nodes which belong to the split-shard to the old-shard and the rest to the new-shard.

2. The system of claim 1, wherein the node is a node belonging to a split-shard having the split-shard as its working shard, and
the dynamic sharding system further includes a shard splitting module that manages an account-wise transaction chain and an account directory based on the shard allocated by the shard allocation module.

3. The system of claim 1, wherein the node is a node belonging to a non-split-shard having the non-split-shard as its working shard, and
the dynamic sharding system further includes a shard moving module that allows the node belonging to the non-split-shard to change its working shard from the non-split-shard to the split-shard.

4. The system of claim 1, wherein the shard addition determination module determines whether shard addition is needed based on at least one of traffic volume, the number of nodes, and the number of accounts.

5. The system of claim 1, wherein the new-shard address derivation module derives the new-shard address by adding one to the highest value among the shard addresses currently included in the blockchain network.

6. The system of claim 1, wherein the split-shard derivation module derives the split-shard from among neighboring shards having a bit distance of 1 from the new-shard address.

7. The system of claim 6, wherein the split-shard derivation module derives the split-shard address by replacing the highest bit set to 1 in the binary value of the new-shard address with 0.

8. The system of claim 1, wherein the shard allocation module allocates the nodes belonging to the split-shard to the old-shard and the new-shard based on at least one of the stake amount and the number of nodes allocated to the old-shard and the new-shard after the split.

9. The system of claim 2, wherein the node is a node allocated to an old working shard, and the shard splitting module deactivates account-wise transaction chains for the accounts managed by nodes allocated to a new working shard, and deletes an account information assigned to a new home shard from the account directory.

10. The system of claim 2, wherein the node is a node allocated to a new working shard, and the shard splitting module deactivates account-wise transaction chains for the accounts managed by nodes allocated to an old working shard, and deletes an account information assigned to an old home shard from the account directory.

11. A dynamic sharding method implemented by at least one processor in a node constituting a blockchain network, the method comprising:
determining whether a shard needs to be added;
deriving a new-shard address based on the number of shards currently included in the blockchain network;
deriving a split-shard splits into a new-shard based on the new-shard address; and
allocating a portion of the nodes which belong to the split-shard to the old-shard and the rest to the new-shard.

12. The method of claim 11, wherein the node is a node belonging to a split-shard having the split-shard as its working shard, and
the dynamic sharding method further includes managing an account-wise transaction chain and an account directory based on the allocated shard.

13. The method of claim 11, wherein the node is a node belonging to a non-split-shard having the non-split-shard as its working shard, and
the dynamic sharding method further includes allowing the node belonging to the non-split-shard to change its working shard from the non-split-shard to the split-shard.

14. The method of claim 11, wherein determining whether a shard needs to be added includes:
determining whether a shard needs to be added based on at least one of traffic volume, the number of nodes, and the number of accounts.

15. The method of claim 11, wherein the deriving of the new-shard address based on the number of shards currently included in a blockchain network includes:
deriving the new-shard address by adding one to the highest value among the shard addresses currently included in the blockchain network.

16. The method of claim 11, wherein the deriving of the split-shard split into the new-shard based on the new-shard address includes:
deriving a split-shard from among neighboring shards having a bit distance of 1 from the new-shard address.

17. The method of claim 16, wherein the deriving of the split-shard splits into the new-shard based on the new-shard address includes:
deriving the split-shard address by replacing the highest bit set to 1 in the binary value of the new-shard address with 0.

18. The method of claim 11, wherein the allocating of the portion of the nodes which belong to the split-shard to the old-shard and the rest to the new-shard includes:
allocating the nodes belonging to the split-shard to the old-shard and the new-shard based on at least one of the stake amount and the number of nodes allocated to the old-shard and the new-shard after the split.

19. The method of claim 12, wherein the node is a node allocated to an old working shard, and
the managing of the account-wise transaction chain and the account directory based on the allocated shard includes:
allowing the node allocated to the old working shard to deactivate the account-wise transaction chains for accounts managed by nodes allocated to a new working shard, and delete an account information assigned to a new home shard from the account directory.

20. The method of claim 12, wherein the node is a node allocated to a new working shard, and
the managing of the account-wise transaction chain and the account directory based on the allocated shard includes:
allowing the node allocated to the new working shard to deactivate the account-wise transaction chains for the accounts managed by nodes allocated to an old working shard, and delete an account information assigned to an old home shard from the account directory.
